# EUROPEAN PATENT SPECIFICATION

(11) **EP 4 606 715 B1**
(45) Date of publication and mention of the grant of the patent: **03.06.2026**
(21) Application number: 25151283.6
(22) Date of filing: 10.01.2025
(51) Int. Cl.: B65B 23/08, B65B 35/04, B65B 35/16, B65B 57/14, B07C 5/04, B65G 47/38, B65G 47/51, B65G 47/71, B65G 47/86, A01K 43/00, B65B 43/52

(54) **METHOD AND SYSTEM FOR TRANSFERRING EGGS**
VERFAHREN UND SYSTEM ZUM ÜBERFÜHREN VON EIERN
PROCÉDÉ ET SYSTÈME DE TRANSFERT D'OEUFS

(30) Priority: 21.02.2024 NL 2037077
(43) Date of publication of application: 27.08.2025
(73) Proprietor: Moba Group B.V., 3771 VE Barneveld (NL)
(72) Inventor: SAMSHUIJZEN, Timothy Vinanda, 3771 VE Barneveld (NL); NEUMANN, Peter Richard, 3771 VE Barneveld (NL); VAN DEN BOSCH, Hendrik, 3771 VE Barneveld (NL)
(74) Representative: V.O.

(56) References cited:
- EP-A1- 0 560 458
- JP-A- 2002 179 021
- JP-A- 2014 005 098

## Description

The invention relates to an egg transferring method and system, in particular for processing a plurality of avian eggs, for example poultry eggs.

Egg transferring systems are known and marketed by the applicant. An example is the MOBA Omnia PX egg processing system (shown in the video https://www.youtube.com/watch?v=WLetUJQIX-c&t=200). Part of the known system includes an egg supply conveyor, extending along a packing lane. The conveyor is configured to drop eggs in a predetermined order into a plurality of below egg transfer stations that have endless transfer structures including egg receiver sets. The egg transfer stations drop the eggs to below (second) transfer stations that are configured for filling below egg packages.

EP0560458 discloses a method and apparatus for transferring discrete articles (e.g. egg) at a receiving and packing station from a randomly supplied conveyor having articles with a plurality of characteristics to a take away conveyor having articles with only certain selected characteristics out of the plurality of characteristics. At each receiving and packing station, the articles having the selected characteristics are transferred from the supply conveyor to a collecting device to form therein a completed row of a certain number of articles. An endless transfer conveyor has a plurality of rows of article holders, each of which, at one point in its travel, is positioned to receive a completed row of articles from the collecting device. The collecting device will deliver a complete row of articles only into an empty row of holders in the transfer conveyor. The transfer conveyor then transfers a completed row of articles to containers on a take away conveyor. A receiving mechanism may be interposed between the transfer conveyor and the containers to receive and lower articles to the containers. During operation, the system utilizes a so-called round-robin sequence for dropping eggs -by the supply conveyor- in respective dropping areas.

A transfer step, for transferring a complete row of eggs into an empty row of holders in the transfer conveyor, will take some processing time. During this time period, the respective article holders are not available to be filled, which means that some of the randomly supplied eggs (having characteristic that is associated with the complete row) can not be transferred and will have to pass the collecting device, for example to be reintroduced into the system, or to be manually handled after discharge. This is cumbersome and can lead to significant delays in processing of the eggs.

The present invention aims to provide a more efficient egg transfer method and corresponding system, in particular to solve or alleviate the disadvantages of the known methods and systems. More particularly, the invention aims to provide a method (and corresponding system) that can achieve very high egg transferring rates, e.g. in case of processing single grade eggs and e.g. in case of processing eggs having mutually different characteristics.

According to the invention, this is achieved by the features of the independent claims.

According to an aspect of the invention, there is provided a method for transferring eggs, including:
- supplying a plurality of eggs along a respective supply path;
- dropping the plurality eggs at a plurality of separate egg dropping areas of the supply path, wherein each egg dropping area is associated with a respective egg transfer station having a first array of first egg receiving structures that catches each egg that is dropped in the respective egg dropping area, to form a row of eggs; and
- dropping the row of eggs by the first array of first egg receiving structures of each egg transfer station, for further processing;

wherein the method includes the steps:
   - defining subsequent, adjoining, groups of eggs in the supplied plurality of eggs, such that each group of eggs includes a sufficient number of eggs for filling substantially all first egg receiving structures of one of the respective dropping areas;
   - a1) dropping eggs from a defined first group of eggs at a first egg dropping area, thereby filling substantially all of the first egg receiving structures of a respective first egg transfer station to form a first row of eggs, and dropping the respective first row of eggs; and
   - a2) dropping eggs from a defined second group of eggs at a second egg dropping area, thereby filling substantially all of the first egg receiving structures of a respective second egg transfer station to form a second row of eggs, and dropping the respective second row of eggs;
wherein during a transferring step the respective first egg receiving structures of an egg transfer station drop a row of eggs to a first array of second egg receiving structures, wherein the second egg receiving structures catch the row of eggs, temporarily hold the eggs, and subsequently drop the eggs.

In this way, a surprisingly significantly more efficient egg transferring process is achieved. In particular, it has been found that significant egg processing gains can be achieved in case a supplied plurality of eggs is divided into subsequent (adjoining) groups of eggs (i.e. by defining those groups, using e.g. a digital system controller), wherein the first group of eggs is being related to the first egg transfer station (to be processed thereby), and the second (i.e. the next) group of eggs is being related to the second egg transfer station (to be processed thereby). Then, the eggs of the first group can e.g. be dropped to the first transfer station (to form a respective first row of eggs), to be processed locally via that first transfer station. Also, the eggs of the second group can be dropped to the second transfer station (to form a respective second row of eggs), to be processed locally via that second transfer station (i.e. step a2).

Once a row of eggs has been completed in one of the two transfer stations (i.e. a first row of eggs or a second row of eggs), that egg row can be dropped for further processing. In the meantime, a group of eggs can be conveyed (by an egg supply conveyor) to another transfer station, for forming a respective row of eggs in the other transfer station. It follows that the system has a relatively long time period to process the row of eggs that has been formed in the first-mentioned transfer station. It also follows that chances are significantly reduced that some of the supplied eggs can not be transferred and will have to pass each of the egg transfer stations.

Optionally, step a2) is carried out (i.e. started and finished) after step a1) has finished. However, depending on the configuration of the system and the supplied eggs, step a1) may have been finished (and may repeat) when step a2) is started, or even before step a) is started.

It is preferred that each egg dropping area is associated with the same number N of first egg receiving structures, N being 6, wherein each group of eggs is defined to include at least four eggs for filling the first egg receiving structures of a respective dropping area (and preferably for filling adjoining first egg receiving structures or a respective array of such structures, to form a respective uninterrupted row of eggs).

For example, each group of eggs can be defined to include exactly six eggs that are specifically assigned to the six first egg receiving structures of a respective dropping area, to fill all those six first egg receiving structures during a respective dropping step a1), a2).

It follows that an array of 6 first egg receiving structures of the each egg transfer station is preferably entirely filled with eggs from a respective group of egg (to form a row of 6 eggs). Alternatively, during operation, less than 6 places provided by an array of first egg receiving structures are filled with eggs, for example 4 or 5 adjoining first egg receiving structures, depending e.g. on a desired egg processing capacity downstream of the first egg receiving structures. This can e.g. related to a configuration of egg boxes that are to be filled in a downstream packaging system (if any), wherein such egg boxes are available in many different commonly known various (e.g. having 2x4, 2x5 or 2x6 egg receiving nest).

According to an embodiment, at least three dropping areas are provided, with corresponding arrays of first egg receiving structures, and that respective (at least three) groups of eggs are defined for those dropping areas, which can lead to optimum egg processing results (in particular in case the plurality of dropping areas are used in a predetermined sequence). Regarding the number of dropping areas, it should be observed that the invention can be used with any plurality of dropping areas, for example two, three, four or five or more dropping areas, e.g. at least ten or more dropping areas.

Further, according to an aspect of the invention, there is provided a system for transferring eggs, in particular a system configured to carry out a method according to the invention, wherein the system includes:
- a supply conveyor for supplying a plurality of eggs along a respective supply path, wherein the conveyor is configured for dropping the supplied eggs at a plurality of separate egg dropping areas of the supply path;
- a plurality of egg transfer stations, each being associated with a respective egg dropping area, each egg transfer station having a first array of first egg receiving structures configured to catch each egg that is dropped in the respective egg dropping area, and to form a row of eggs, and to drop the row of eggs; and
- a digital system controller that is configured to carry out at least the following steps:
   - define subsequent, adjoining, groups of eggs in the supplied plurality of eggs, such that each group of eggs includes a sufficient number of eggs for filling substantially all first egg receiving structures of one of the respective dropping areas; and
control the supply conveyor such that the conveyor
- a1) drops eggs from a defined first group of eggs at a first egg dropping area, thereby filling substantially all of the first egg receiving structures of a respective first egg transfer station to form a first row of eggs;
- a2) drops eggs from a defined second group of eggs at a second egg dropping area, thereby filling substantially all of the first egg receiving structures of a respective second egg transfer station to form a second row of eggs;

wherein each first array of egg receiving structures is arranged at a substantially fixed position below the respective egg supply path provided by the supply conveyor,
wherein each egg transfer station has a second array of first egg receiving structures, arranged at a substantially fixed position below a respective first array first egg receiving structures for receiving a row of eggs there-from, the second array of first egg receiving structures being configured for temporarily holding a row of eggs and for dropping the row of eggs.

In this way, above-mentioned advantages can be achieved.

Further, according to an aspect of the invention, there is provided a digital system controller, for example a computer or data processor, configured to control a system according to the invention, for example to carry out a method according to the invention. Advantageously, the controller is configured to carry out at least the following steps:
- define subsequent, adjoining, groups of eggs in the supplied plurality of eggs, such that each group of eggs includes a sufficient number of eggs for filling substantially all first egg receiving structures of one of the respective dropping areas; and
control the supply conveyor such that the conveyor:
- a1) drops eggs from a defined first group of eggs at a first egg dropping area for filling substantially all of the first egg receiving structures of a respective first egg transfer station to form a first row of eggs;
- a2) drops eggs from a defined second group of eggs at a second egg dropping area for filling substantially all of the first egg receiving structures of a respective second egg transfer station to form a second row of eggs;
wherein the system controller is further configured to:
control the first egg receiving structures of a respective first egg transfer station to drop a row of eggs into a respective array of second egg receiving structures of the first transfer station;
- control the first array of first egg receiving structures of a respective second transfer station to drop a row of eggs into a respective array of second egg receiving structures of the second transfer station.

In this way, above-mentioned advantages can be achieved.

Further advantageous embodiments are described in the dependent claims. In the following, various features, effects and optional details of non-limiting examples of the invention will be explained with reference to the drawings. Therein shows:
Figure 1 a side view of part of an example of a generally known egg transferring system;
Figure 2 a side view of non-limiting example of part of an egg transferring system according to the invention;
Figure 3 a detail Q of Figure 2;
Figure 4 schematically a first part of operation of the system shown in Figures 2-3;
Figure 5 schematically a second part of operation of the system shown in Figures 2-3;
Figure 6 schematically a third part of operation of the system shown in Figures 2-3;
Figure 7 a side view of part of the egg transferring system shown in Figures 2-3, during dropping eggs at the first egg dropping area;
Figure 8 a side view similar to Figure 7, during dropping eggs at the second egg dropping area;
Figure 9 a side view similar to Figure 8, after dropping a row of eggs at the first egg dropping area;
Figure 10 a side view similar to Figure 7, during dropping eggs at the third egg dropping area; and
Figure 11 a side view similar to Figure 10, after dropping a row of eggs at the second egg dropping area;

In this application, the same or corresponding features are denoted by the same or corresponding reference signs.

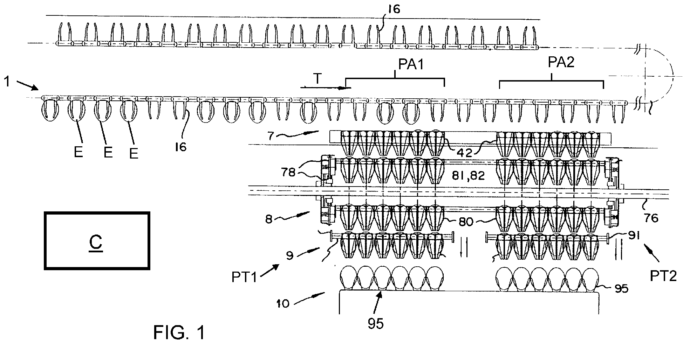

Figure 1 depicts part of an example of a prior art egg transferring system, and respective egg transferring method, generally known e.g. from EP0560458.

The depicted system has a supply conveyor 1 for supplying a plurality of eggs E along at least one respective supply path (i.e. supply track, supply lane). In the following, one supply path (e.g. supply track/lane) is described, but it will be appreciated that the system can provide a plurality of (parallel) supply paths (supply tracks/lanes) for supplying eggs E. See e.g. EP0560458.

The supply conveyor 1 is configured to transport the eggs E in a respective, substantially horizontal transport direction T. The conveyor 1 is also configured to drop the eggs E at a plurality of separate egg dropping areas PA1, PA2 that are associated with the respective supply path, towards respective transfer stations PT1, PT2 (the transfer station PT1, PT2 being associated with those dropping areas PA1, PA2 of the respective supply path/track).

The supply conveyor 1 can be configured in various ways. The conveyor 1 can e.g. include an array of egg holders 16, for supplying a respective egg stream along the respective supply path, each of those holders 16 e.g. having a pair of egg engagement elements (e.g. carriers or cup halves), wherein each pair of egg engagement elements can be automatically moved from an egg carrying state (shown in the drawing), to an egg releasing state (i.e. an opened state, not shown) for dropping an egg E downwardly into egg receivers (receiver elements) of a below transfer station PT1, PT2.

The dropping of an egg E by the supply conveyor 1 is in particular controlled by a respective central control unit or processor, i.e. a digital system controller C (schematically indicated).

The configuration is preferably such, that the system controller C can determine, which egg (supplied by the supply conveyor) 1 is dropped into which section (i.e. holder 42) of a respective transfer station PT1, PT2, for example if the controller knows of a match, e.g. when an egg has a certain egg characteristic (see below) that is associated with a certain transfer station PT1, PT2 (for example, different transfer station PT1, PT2 can be associated with mutually different egg characteristics of eggs E that are being processed).

A plurality of egg transfer stations PT1, PT2 is present, each being associated with a respective egg dropping area PA1, PA2. In the known system, each transfer station PT1, PT2 provides a packing station, for packing the eggs into egg containers 95. It will be appreciated that a transfer station can also be configured for receiving and transferring the eggs to other types of egg discharge structures, e.g. to an egg discharge conveyor or the-like (i.e. without the presence of a packing station below the transfer station).

Each egg transfer station PT1, PT2 has an array of first egg receiving structures 42 (of a respective collecting device 7) configured to catch eggs E that are dropped in the respective egg dropping area PA1, PA2, to form a row of eggs, and to drop the row of eggs E after it has been formed. Such egg receiving structures 42 can be configured in various ways, as will be clear to the skilled person. For example, each egg receiving structure 42 can be an egg holder, including two holder portions that can be moved between a first position for receiving and holding a dropped egg E, and a second position for releasing (and dropping) the egg. Each first array of egg receiving structures 42 is preferably arranged at a substantially fixed position (vertically, and horizontally) below the respective egg supply path provided by the supply conveyor 1, and in particular in parallel with the egg supply path. In Figure 1, in particular each of the transfer station PT1, PT2 has been shown having an array of six first egg receiving structures 42, for forming a respective row of six eggs E.

Further, in the Fig. 1 example, mounted beneath each array of first egg receiving structures 42 (i.e. a respective collecting device 7) is an endless transfer conveyor 8, extending in transverse direction with respect to the egg supply path of the supply conveyor 1. Each endless transfer conveyor 8 is arranged to drop rows of (six) eggs into rows of article holders of a receiving mechanism 9 (located below this endless transfer conveyor 8) which then transfers the egg rows to a further processing station, in this case to egg containers 95 held by a take away conveyor 10 that is located below the respective transfer station PT1, PT2.

The endless transfer conveyor 8 can include rows 80 of respective egg holders for receiving the egg rows from the respective collecting device 7 at an upper level, and for dropping the egg rows at a lower level (i.e. below the upper level).The or each endless transfer conveyor 8 can e.g. include a shaft 76 for end pulleys 77 (the end pulleys at the other end of transfer conveyor 8 are not shown), for conveying the rows 80 of egg holders along the respective endless path. said holders e.g. being mounted on pivot bars 81 and 82 which support these holders.

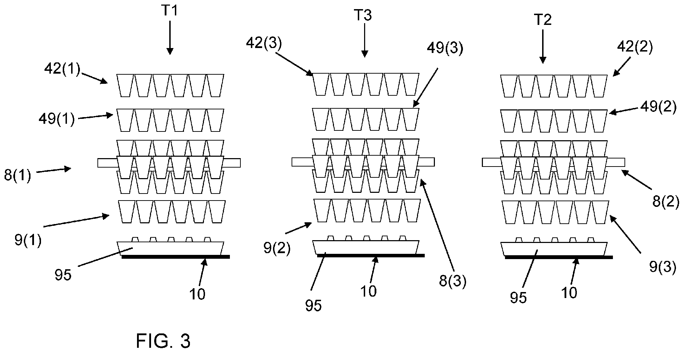

The system can include an afore-mentioned take away conveyor 10 for supporting egg containers 95 below the respective egg transfer station PT1, PT2 (to be filled with the egg rows), and for removing an egg container 95 after it has been filled with the eggs E. It should be observed that egg containers 95 that are to be filled can e.g. be part of a respective take away conveyor 10, or separate containers, e.g. egg cartons, trays or boxes (see Figures 3, 7-11).

Generally, the system includes the afore-mentioned digital system controller C (e.g. a central processor) for controlling operation of system components, such as the supply conveyor, each transfer station PT1, PT2 and e.g. a take away conveyor 10. As will be clear to the skilled person, the central system controller C can be configured in various ways, e.g. as a computer, microcontroller, data processor and/or the-like, including e.g. suitable digital hardware and respective software that is executed by the hardware. The system controller C can communicate with other system components (e.g. the conveyors 1, 10, transfer stations and the-like) via suitable wired and/or wireless communication links (not shown), for transmitting control signals thereto to control operation of those system components, and e.g. for mutually synchronizing operation of those system components if required.

Preferably, the system includes a (digital) memory, which can e.g. be integral part of the digital system controller C. The memory can e.g. be used for storing one or more (predetermined) egg characteristics S, M, L of the eggs E that are supplied by the supply conveyor 1, preferably in combination with transport positions of those eggs in the supply conveyor 1. Thus, during operation, based on the information stored in the memory, the digital system controller C preferably 'knows' which egg is present in a specific egg holder 16 of the supply conveyor 1, together with the respective characteristic(s) of that particular egg E.

Said egg characteristic(s) that can optionally be used by the system can concern e.g. egg size or grade, for example S for Small, M for Medium and L for Large eggs, and/or different egg shell strength characteristics, and/or differences in printed information on the eggs (if any), and/or one or more other egg characteristics, e.g. color (White or Brown eggs), and/or egg-farm related information, and/or a combination of these or other egg characteristics.

The system controller C is preferably configured to use the stored egg characteristic(s) S, M, L, in particular such that only eggs having the same egg characteristic (e.g. M) are used for filling the first egg receiving structures 42 of a respective dropping area PA1, PA2 (so that below egg container 95 is filled with those particular eggs).

As is described in EP0560458, and shown in Figure 1, during operation, each individual egg E can be supplied in random fashion via the supply conveyor 1. Optionally, information stored in the system controller C with respect to each individual egg can permit subsequent disposition of each individual egg in accordance with predetermined parameters (i.e. the afore-mentioned one or more egg characteristic). In the known method, eggs E are dropped in respective dropping areas in the so-called round-robin sequence. However, a transfer step, for transferring a complete row of eggs from the first egg receiving structures 42 into an empty row of holders in the transfer conveyor 8 will take some processing time. During this time period, the respective first egg receiving structures 42 are not available to be filled, which means that some of the randomly supplied eggs (having characteristic that is associated with the complete row) can not be transferred and will have to pass the collecting device (which is cumbersome and can lead to significant delays in processing of the eggs).

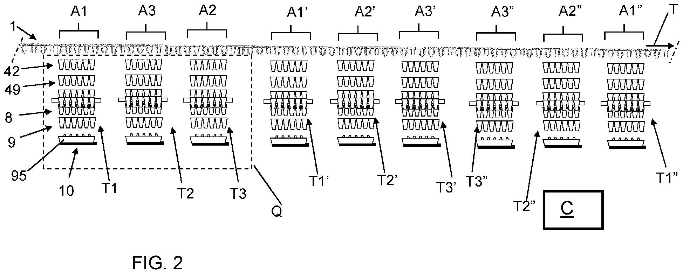

Figure 2 is similar to Figure 1 and depicts an non-limiting example of an improved system that overcomes this problem. Figure 3 shows a detail Q of Fig. 2. The system includes a supply conveyor 1 for supplying the plurality of eggs E along a respective (substantially horizontal) supply path. The conveyor 1 is configured for dropping the eggs E of the supplied eggs at a plurality of separate egg dropping areas A1, A2, A3, A1', A2', A3', A1", A2", A3" of the supply path. In this case, a plurality of egg transfer stations T1, T2, T3, T1', T2', T3', T1", T2", T3" is present, each being associated with a respective egg dropping area A1, A2, A3, A1', A2', A3', A1", A2", A3". As in the earlier example, each egg transfer station T1, T2, T3, T1', T2', T3', T1", T2", T3" has a first array of first egg receiving structures 42 configured to catch each egg E that is dropped in the respective egg dropping area A1, A2, A3, A1', A2', A3', A1", A2", A3"and to form a row of eggs, and to drop the row of eggs E.

Referring to Figure 2, for example, a group (preferably three, or more) of first egg dropping areas A1, A2, A3 are provided defined, which first egg dropping areas may e.g. be associated with a first egg characteristic (for processing eggs E having that first egg characteristic.

Optionally, a second group (preferably three, or more) of second egg dropping areas A1', A2', A3' can be defined, which second egg dropping areas may e.g. be associated with a second egg characteristic (for processing eggs E having that second egg characteristic, that differs from the first egg characteristic).

Similarly, more groups of a plurality (preferably at least two or at least three) of dropping areas can be defined for processing eggs having a respective egg characteristic (differing from the egg characteristics of eggs that are processed via the other groups of dropping areas). As an example, a third group (e.g. three or more) of third egg dropping areas A1", A2", A3" can be defined, which third egg dropping areas may be associated with a third egg characteristic (for processing eggs E having that third egg characteristic, that differs from each of the first egg characteristic and the second egg characteristic).

As is shown in Figures 2, 3 each of the groups of at least three egg dropping areas A1, A2, A3, A1', A2', A3', A1", A2", A3" is associated with (i.e. related to) a respective group of (at least three) egg transfer stations T1, T2, T3, T1', T2', T3', T1", T2", T3". It follows (See Fig. 3) that a first dropping area A1 of the first group of dropping areas is specifically associated with a first egg transfer station T1 of a respective first group of egg transfer stations. It follows that a first dropping area A1 of the first group of dropping areas is associated with a first egg transfer station T1 of a respective first group of egg transfer stations. A second dropping area A2 of the first group of dropping areas is specifically associated with a second egg transfer station T2 of the first group of egg transfer stations. Also, a third dropping area A3 of the first group of dropping areas is associated with a third transfer station T3 of the respective first group of egg transfer stations. The same holds for the other groups of dropping areas A1', A2', A3', A1", A2" and the respective egg transfer stations T1', T2', T3', T1", T2", T3".

The transfer stations of each group of transfer stations can be located near each other or next to each other (as in Figure 2), but that is not required. Also, the transfer stations of each group of transfer stations can be mutually arranged in different sequences along a transport direction T of a common supply conveyor 1 (examples are shown in Fig. 2).

As is shown in more detail in Figure 3, concerning a first group of egg transfer stations, each transfer station T1, T2, T3 includes a first (upper) array (row) of first egg receiving structures 42(1), 42(2), 42(3), extending below the supply conveyor 1. Each array of first egg receiving structures 42(1), 42(2), 42(3) is arranged in parallel with the above egg supply conveyor 1. These first egg receiving structures are configured to catch each egg E that is dropped in the respective egg dropping area A1, A2, A3, to locally form a row of eggs (and e.g. to temporarily hold the row of eggs E), and to drop the formed row of eggs E. Dropping of an egg row in particular involves dropping the eggs E of the respective egg row at the same time, towards a lower section of the respective egg transfer station T1, T2, T3. Preferably, each array of first egg receiving structures 42(1), 42(2), 42(3) is independently controllable (by the system controller C), for receiving and (simultaneously) dropping eggs E independent of operation of the other arrays of first egg receiving structures. In case the supply conveyor 1 provides a plurality of (parallel) egg supply lanes, a plurality of arrays of egg receiving structures can be available for catching the eggs from the different supply lanes (e.g. a second array of first egg receiving structures can be present to catch eggs E that are dropped from a second supply lane of the conveyor 1, to form a row of eggs, and to drop the row of eggs E, as will be clear to the skilled person).

According to the invention, significantly improved results are achieved in case each transfer station T1, T2, T3 includes a first array of second egg receiving structures 49(1), 49(2), 49(3) that is configured to catch formed egg rows that are dropped by a respective first array of first egg receiving structures 42(1), 42(2), 42(3), e.g. for additional buffering. Such second egg receiving structures 49(1), 49(2), 49(3) are e.g. configured to drop the egg rows to lower transfer units 8, for further processing. A configuration of each array of second egg receiving structures 49(1), 49(2), 49(3) can be similar to the configuration of a respective array of first egg receiving structures 42(1), 42(2), 42(3), and preferably, each array of second egg receiving structures is independently controllable (by the system controller C). According to an embodiment, in each transfer station T1, T2, T3 several arrays of second egg receiving structures can be present for processing eggs from several supply lanes of the supply conveyor, if available.

It follows that during a transferring step (in particular controlled by the system controller C) an array of first egg receiving structures 42 of an egg transfer station T1, T2, T3 drops a row of eggs E to a corresponding array of second egg receiving structures 49, wherein the second egg receiving structures 49 catch the row of egg, temporarily hold the formed egg row, and subsequently drop the respective row of eggs.

It has been found that application of arrays of second egg receiving structures 49(1), 49(2), 49(3) can provide improved buffer capacity, so that higher system throughput can be achieved, wherein chances that supplied eggs can not be dropped (due to full first receiving structures) can be minimized. This in particular holds for the present combination of second egg receiving structures 49(1), 49(2), 49(3), being located directly below the respective first egg receiving structures 42(1), 42(2), 42(3) (for directly and swiftly receiving rows of eggs therefrom so that the emptied first egg receiving structures become available again to be filled with eggs), together with improved filling sequence of those first egg receiving structures (as described above).

As is shown, each of the transfer units 8 of a transfer station T1, T2, T3 can e.g. be a respective endless transfer conveyor 8(1), 8(2), 8(3) extending in transverse direction with respect to the egg supply path (i.e. transport direction T) of the supply conveyor 1, similar to the transfer unit example 8 shown in Figure 1. It should be noted that the application of the afore-mentioned intermediate endless transfer conveyors 8 is in particularly advantageous in case the system does include a supply conveyor 1 that provides a plurality of parallel egg supply lanes, wherein such an endless transfer conveyor 8 can be arranged for receiving eggs that are transferred via intermediate egg receiving structures from each of those supply lanes.

Optionally (see Figures 2-3), an egg loading station or packing station can be present below each egg transfer station T1, T2, T3 (of each group of . egg transfer station). In this example, such a loading or packing station can include a respective take away conveyor 10 (i.e. a discharge conveyor), e.g. for supply of empty egg containers 95 that are to be filled with the rows of eggs E, and for taking away the egg containers 95 after they have been filled. Optionally, as will be clear to the skilled person, each transfer station T1, T2, T3 can include further transfer structures 9(1), 9(2), 9(3), e.g. receiving mechanisms 9 (having e.g. an array of controllable egg receiving structures), e.g. between each endless transfer conveyor 8(1), 8(2), 8(3) and the loading/packing station, for transferring egg rows that are dropped by the endless transfer conveyor towards the loading station (and into egg containers 95) located there-below.

It will be appreciated that other groups of transfer stations T1', T2', T3', T1", T2", T3", if any, can have a similar configuration (and operation/functioning) as the group T1, T2, T2 shown in Figure 3. For example, another (second) group of egg transfers stations T1', T2', T3' -if any- can be associated with a second egg characteristic L, for transferring those eggs. Also, similarly, yet another (third) group of egg transfers stations T1", T2", T3" -if any- can be associated with a third egg characteristic S, for transferring the respective eggs.

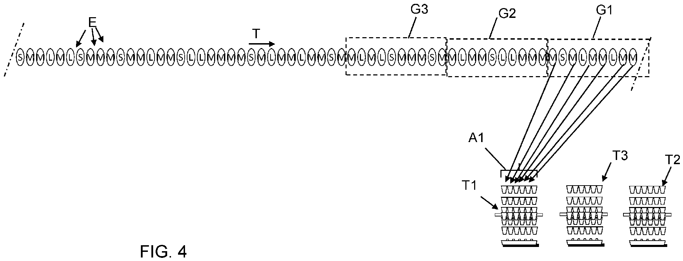

Advantageously, according to a preferred embodiment of the present invention, the system controller C is configured to carry out at least the following steps (see Figures 4-6):
- define subsequent (viewed in parallel with the egg supply direction T), adjoining, groups G1, G2, G3 of eggs in the supplied plurality of eggs E, such that each group of eggs E includes a sufficient number of eggs E for filling substantially all first egg receiving structures 42 of one of the respective dropping areas A1, A2, A3; and
control the supply conveyor 1 such that the conveyor 1:
- a1) drops eggs E from a defined first group G1 of eggs at a first egg dropping area A1 for (successively) filling substantially all of the first egg receiving structures 42 of a respective first egg transfer station T1) to (locally) form a first row of eggs (to be subsequently dropped for further processing);
- a2) drops eggs E from a defined second group G2 of eggs at a second egg dropping area A2 for (successively) filling substantially all of the first egg receiving structures 42 of a respective second egg transfer station T2 to (locally) form a second row of eggs (to be subsequently dropped for further processing).

In this way, significantly improved egg processing can be achieved.

As is schematically shown in Figure 4, e.g., a first group of (at least three) egg transfers stations T1, T2, T3 can be associated with (e.g. assigned to) a first egg characteristic M, for processing eggs E having that specific egg characteristic M (only). In that case, the system controller C can be configured to define (i.e. select) each of the groups of supplied eggs G1, G2, G3 (e.g. using predetermined egg characteristic information of the eggs, and respective egg positions in the supply path, stored in a respective memory) such, that each egg group G1, G2, G3 contains exactly the number of eggs having that first egg characteristic M for filling substantially all of the first array of first egg receiving structures 42 of a single one respective egg transfer station T1, T2, T3.

It is preferred that the eggs of each egg group G1, G2, G3 (as defined by the system controller C) are closest-neighbor eggs of the same respective egg characteristic M (which egg characteristic can be assigned to the first group of transfer stations), viewed along the supply conveyor's transport direction T. In other words, the system controller C can be configured to divide the supplied eggs into subsequent (e.g. sequential) egg groups G1, G2, G3 (,G1, G2, G3, G1, G2, G3, et cetera) such, that each egg group G1, G2, G3, to be transferred via the first group of transfer stations T1, T2, T3, preferably consists of a sequence of eggs E of the same egg characteristic M. In particular, the eggs E of each selected egg sequence (forming an egg group G1, G2, G3) successively pass the same point of the egg supply path during system operation, and each of these sequences contains exactly the number of eggs for filling substantially all, namely more than 50%, and preferably 100%, of the first array of first egg receiving structures 42(1), 42(2), 42(3) of a single one respective egg transfer station T1, T2, T3.

In a preferred example, each array of first egg receiving structures consists of exactly 6 (six) egg receiving structures 42. In that case, the system controller C is configured to define each group of eggs E to include at least four eggs E for substantially filling the first egg receiving structures 42 of a respective dropping area A1, A2, A3.

More preferably, each array of first egg receiving structures consists of exactly 6 (six) egg receiving structures, wherein the system controller C is configured to define each group of eggs E to include at five eggs E for substantially filling the first egg receiving structures 42 of a respective dropping area A1, A2, A3, and preferably six eggs E for filling all the six first egg receiving structures 42 associated with the respective dropping area A1, A2, A3.

Optionally, in a supplied egg stream, eggs having a different egg characteristic S, L can be located between closest-neighbor eggs of a sequence of eggs having a respective first egg characteristic M (see Fig. 4): such differently characterized eggs preferably not form part of the defined groups G12, G2, G3 that are to be fed to the a first group of (at least three) egg transfers stations T1, T2, T3 (assigned to the first egg characteristic M), and can be fed to further groups of egg transfers stations T1', T2', T3' , T1", T2", T3" if available. In the latter case, the system controller C is preferably configured to group those eggs having a different egg characteristic S, L in the same way as described above, for (successively) filling substantially all of the first egg receiving structures 42 of respective egg transfer stations T1', T2', T3' , T1", T2", T3" that can be assigned to transferring those eggs. Also, in that case, the system controller C is preferably configured to control the supply conveyor 1 such that the conveyor 1 drops eggs E from a defined group of eggs at a second egg dropping area A2', A2" for (successively) filling substantially all of the first egg receiving structures 42 of a respective second egg transfer station T2', T2".

More preferably, the system controller C is configured to control the supply conveyor 1 such (see Figures 4-6) that the conveyor:
- a3) drops eggs E from a defined third group G3 of eggs at a third egg dropping area A3 for (successively) filling substantially all of the first egg receiving structures 42(3) of a respective third egg transfer station T3 to form a third row of eggs (to be subsequently dropped for further processing.

It is preferred that the system controller C is configured to control the supply conveyor 1 such that it repeats the various steps (a1), a2), a3)), for processing a large number of eggs supplied by the supply conveyor 1 (wherein the large number of eggs can be grouped into numerous subsequent egg groups by the system controller C, a will be clear to the skilled person).

According to a further embodiment, as is described above, the system includes a memory for storing egg characteristic(s) S, M, L of the eggs E that are supplied by the supply conveyor 1, wherein the system controller C is configured to use the stored egg characteristics S, M, L for defining the groups of eggs E, in particular such that only eggs having the same egg characteristic M are used for filling the first egg receiving structures 42 of a respective dropping area A1, A2, A3.

In particular, the system controller is configured to:
- determine mutually different egg dropping positions, along the supply path, of the eggs E of each group G1, G2, G3 of eggs, wherein each egg dropping position is associated with one first egg receiving structure 42 of the respective first array of first egg receiving structures 42 at the respective egg dropping area A1, A2, A3, and optionally storing the determined egg dropping positions of each of the eggs in a memory; and
- control the supply conveyor 1 to drop the respective eggs E at the determined egg dropping positions.

As follows from the above, each first array of egg receiving structures 42 is preferably arranged at a substantially fixed position below the respective egg supply path provided by the supply conveyor 1. Also, each egg transfer station T1, T2, T3 preferably has a second array of first egg receiving structures 42, arranged at a substantially fixed position below a respective first array first egg receiving structures 42 for receiving a row of eggs there-from, the second array of first egg receiving structures 42 being configured for temporarily holding a row of eggs and for dropping the row of eggs. Further, each egg transfer station T1, T2, T3 optionally includes an egg buffering conveyor, e.g. a said endless transfer conveyor 8, having parallel arrays of egg receiving structures that are movable transversally with respect to the egg supply path of the supply conveyor 1, for receiving rows of eggs from an above array of first egg receiving structures.

During operation, the system can carry out a method for transferring eggs. The method includes (see Figures 4-6):
- supplying a plurality of eggs E (in a transport direction T) along a respective supply path;
- dropping the supplied plurality of eggs E at a plurality of separate egg dropping areas A1, A2, A3 of the supply path, wherein each egg dropping area A1, A2, A3 is associated with a respective egg transfer station T1, T2, T3 having a first array of first egg receiving structures 42 that catches each egg E that is dropped in the respective egg dropping area A1, A2, A3, to form a row of eggs; and
- dropping the row of eggs E, by the first array of first egg receiving structures 42 of each egg transfer station T1, T2, T3, for further processing;

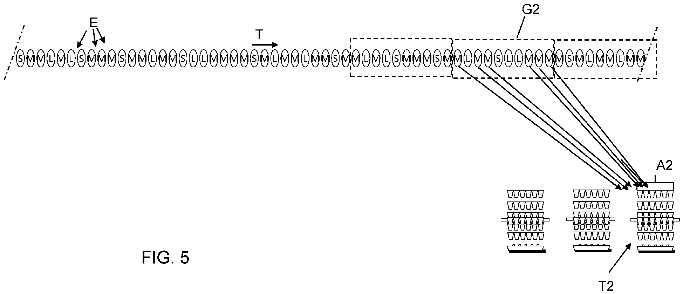

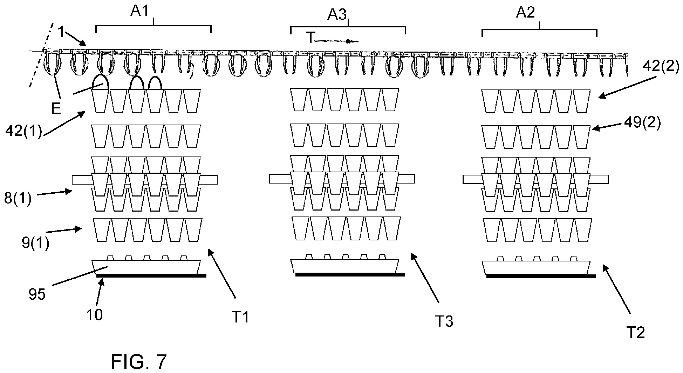

In order to achieve improved, efficient processing of the eggs, the method includes the steps:
- defining (by the system controller C) subsequent, adjoining, groups G1, G2, G3 of eggs in the supplied plurality of eggs E, such that each group of eggs E includes a sufficient number of eggs E for filling substantially all first egg receiving structures 42 of one of the respective dropping areas A1, A2, A3;
- a1) dropping eggs E from a defined first group G1 of eggs at a first egg dropping area A1 for (successively) filling substantially all of the first egg receiving structures 42 of a respective first egg transfer station T1 (see Figures 4, 7), locally forming a respective first row of eggs; and
- a2) dropping eggs E from a defined second group G2 of eggs at a second egg dropping area A2 for (successively) filling substantially all of the first egg receiving structures 42 of a respective second egg transfer station T2 (see Figures 5, 8, 9), locally forming a respective second row of eggs.

As follows from the above, each egg dropping area A1, A2, A3 can be associated with the same number N of first egg receiving structures, N being 6, wherein each group of eggs E is preferably defined to include at least four eggs E for substantially filling the first egg receiving structures 42 of a respective dropping area A1, A2, A3. More preferably, each group of eggs E is defined to include exactly six eggs E that are specifically assigned to the six first egg receiving structures 42 of a respective dropping area A1, A2, A3, to fill all those six first egg receiving structures 42 during a respective dropping step a1), a2).

In a preferred embodiment, three egg transfer stations T1, T2, T3 are provided for corresponding three dropping zones A1, A2, A3. Then, the method can include the step of:
- a3) dropping eggs E from a defined third group G3 of eggs at a third egg dropping area A3 for filling substantially all of the first egg receiving structures 42 of a respective third egg transfer station T3, thereby locally forming a respective third row of eggs.

During operation, as follows from the above, at least one of the groups of eggs E can include a plurality of eggs having a first egg characteristic M and at least one egg having a second egg characteristic S that differs from the first egg characteristic M, wherein only the eggs having the first egg characteristic M are used for filling the first egg receiving structures 42 of the respective dropping areas A1, A2, A3. In a further embodiment, the plurality of separate egg dropping areas A1, A2, A3, A1', A2', A3', A1", A2", A3" at least includes a first group of egg dropping areas A1, A2, A3 and a second group of egg dropping areas A1', A2', A3', each of these groups of egg dropping areas being associated with respective group of egg transfer stations T1, T2, T3, T1', T2', T3', T1", T2", T3" that assigned to transferring eggs E having a respective egg characteristic S, M, L. Then, the method preferably includes:
- defining subsequent first groups G1, G2, G3 of eggs in the supplied plurality of eggs E, such that each first group of eggs E includes a sufficient number of eggs E for filling substantially all first egg receiving structures 42 of one of the respective dropping areas A1, A2, A3 of the first group of dropping areas; and
- defining subsequent second groups of eggs in the supplied plurality of eggs E, such that each second group of eggs E includes a sufficient number of eggs E for filling substantially all first egg receiving structures 42 of one of the respective dropping areas A1', A2', A3' of the second group of dropping areas.

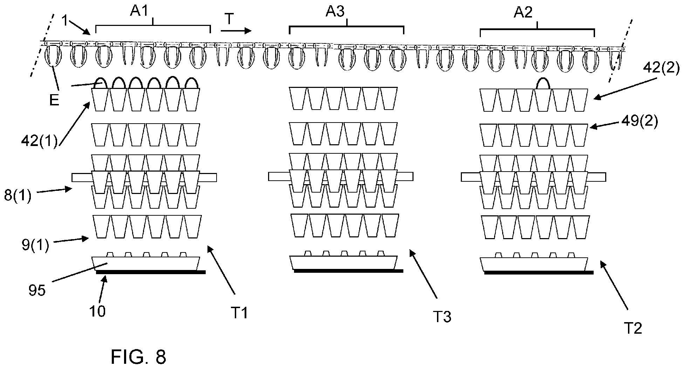

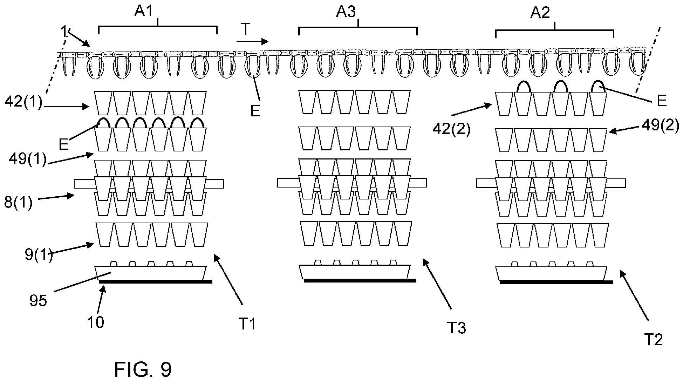

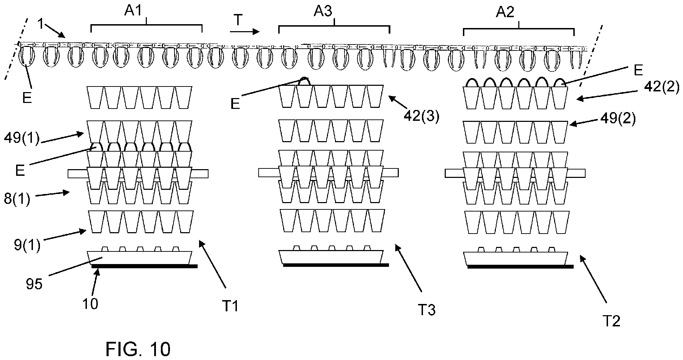

Moreover, advantageously (as has been mentioned before), during a transferring step (see Figures 8, 9) the respective first egg receiving structures 42 of an egg transfer station T1, T2, T3 drops a row of eggs E to a first array of second egg receiving structures 49, wherein the second egg receiving structures 49 catch the row of eggs E, temporarily hold the eggs E, and subsequently drop the eggs E (see Figure 10). As follows from the above, the system controller C can control the first egg receiving structures 42 of each respective egg transfer station T1, T2, T3 to drop a row of eggs E into a respective array of second egg receiving structures 49 of the transfer station.

According to a further embodiment, as follows from the above, the method preferably includes:
- determining mutually different egg dropping positions, along the supply path, of the eggs E of each group G1, G2, G3 of eggs, wherein each egg dropping position is associated with one first egg receiving structure 42 of the respective first array of first egg receiving structures 42 at the respective egg dropping area A1, A2, A3, and optionally storing the determined egg dropping positions of each of the eggs in a memory; and
- using the determined egg dropping positions to drop the respective eggs E.

More specifically, Figure 4 schematically shows three subsequent egg groups G1, G2, G3 (as defined by the system controller C), that are supplied consecutively by the supply conveyor, the egg groups G1, G2, G3 containing eggs E that are to be transferred via three (separate) dropping areas A1, A2, A3 to respective transfer stations T1, T2, T3. In particular, the subsequent egg groups G1, G2, G3, as defined by the system controller C, are located next to each other, viewed in parallel with the egg supply direction T, and do not overlap. The system controller C can e.g. be configured to associate conveyor components of the supply conveyor 1 (e.g. egg holders 16, carrying the eggs) with the defined egg groups G1, G2, G3, for controlling the conveyor 1 to drop the eggs at their specific transfer stations T1, T2, T3, as will be clear to the skilled person.

A first egg group G1, in this case including 6 subsequent eggs E of the same egg characteristic M, is defined, and the supply conveyor 1 is controlled such that those 6 eggs are transferred to the six upper egg receiving structures 42(1) of the first transfer station T1 (see Fig. 4). A subsequent (adjoining) second egg group G2, in this case including 6 subsequent eggs E of that same egg characteristic M, is defined and the supply conveyor 1 is controlled such that those 6 eggs are transferred to the six upper egg receiving structures 42(2) of the second transfer station T2 (see Fig. 5).

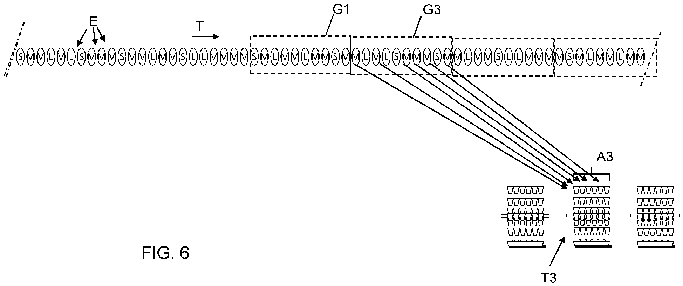

A subsequent (adjoining) third egg group G3, in this case including 6 subsequent eggs E of that same egg characteristic M, is defined and the supply conveyor 1 is controlled such that those 6 eggs are transferred to the six upper egg receiving structures 42(3) of the third transfer station T3 (see Fig. 6). In this non-limiting example, egg transfer to the third transfer station T3 is started after the 6 upper egg receiving structures 42(2) of the second transfer station 2T have been filled (forming a completed second egg row) in the previous step.

This process is preferably repeated for the entire supplied egg stream, wherein a next first egg group G1 can be defined as above (after - adjoining- the third egg group G3) for transfer via the first transfer station (see Fig. 6), et cetera.

Figure 7 shows an example of the egg transfer process in more detail. Therein, a stream of eggs is being supplied by the supply conveyor 1, wherein the stream of eggs has been divided/grouped into the above-mentioned egg groups G1, G2, G3, to be transferred via the respective (first) group of transfer stations T1, T2, 3, e.g. to packing stations (analogue the grouping shown in Figures 4-6).

Figure 7 shows a first step, i.e. the filling of the six upper egg receiving structures 42(1) of the respective first egg transfer station T1 (with the eggs of the defined first egg group G1), wherein the conveyor 1 is controlled to drop selected eggs (e.g. eggs having a first egg characteristic M) from the first defined egg group G1 one-by-one into empty positions of the egg receiving structures 42(1) of that first egg transfer station T1. In case there are eggs E that are not the be transferred via the first group of egg transfer stations T1, T2, T3, such eggs may pass to a downstream system section (e.g. to downstream egg transfer stations T1', T2', T3', T1", T2", T3" - if any- the be processed thereby).

Figure 8 depicts a subsequent step (i.e. subsequent to Fig. 7), wherein each of the six upper egg receiving structures 42(1) of the respective first egg transfer station T1 has been filled. Thus, a completed first egg row has been formed in those upper egg receiving structures 42(1), by the eggs from the defined first egg group G1. The process further involves feeding eggs from the defined second egg group G2 to the six upper egg receiving structures 42(2) of the respective second egg transfer station T2 (wherein the conveyor 1 is controlled to drop selected eggs -e.g. eggs having a first egg characteristic M- one-by-one into empty positions of the egg receiving structures 42(2) of the second egg transfer station T2). Transferring eggs to the second egg transfer station T2 by the supply conveyor 1, and in this case also the filling of these egg receiving structures 42(2) of the second egg transfer station T2, provides time for the first egg transfer station T1 to pass the upper egg row downwards, e.g. to the second array of egg receiving structures 49(1). During the filling of the egg receiving structures 42(2) of the second egg transfer station T2, the first egg transfer station T1 may also retain (buffer) a row of eggs in its upper array of egg receiving structures 49(1) if desired or required (e.g. depending on a filling grade of downstream transfer units 49(1), 8(1), 9(1) of the respective first transfer station T1).

Figure 9 depicts a subsequent step (i.e. subsequent to Fig. 8). In this case, the defined second egg group G2 is still being used to fill the six upper egg receiving structures 42(2) of the respective second egg transfer station T2. In this non-limiting example, the upper array of egg receiving structures 42(1) of the first transfer station T1 has dropped its egg row into the lower second array of egg receiving structures 49(1), however, as is mentioned before, that is not required yet. In particular, the upper first array of the egg receiving structures 42(3) is still empty and available for receiving eggs E from the supply conveyor 1, and (in this example) can be filled after the six upper egg receiving structures 42(2) of the second egg transfer station T2 have been filled.

It follows that the upper first arrays of egg receiving structures 42(1), 42(2), 42(3) of the three transfer stations T1, T2, T3 are being (entirely) filled in a predetermined sequence, providing relatively large time periods for respective egg row dropping actions towards lower sections of the stations T1, T2, T3.

Figure 10 depicts a subsequent step (i.e. subsequent to Fig. 9). In this case, the defined second egg group G2 has been used to completely fill the six upper egg receiving structures 42(2) of the respective second egg transfer station T2, thereby forming a second row of eggs. In this example, the upper array of egg receiving structures 42(1) of the first transfer station T1 has already been emptied is and available for receiving eggs again. Still, these upper array of egg receiving structures 42(1) of the first transfer station T1 are not yet used for receiving eggs again (and can temporarily remain empty). To the contrary, eggs E from the defined third group of eggs G3 are now being fed one-by-one into empty positions of the egg receiving structures 42(3) of the third egg transfer station T3. Further, Figure 9 depicts the possible transfer of a row of eggs through the first egg transfer station T1, from the second array of receiving structures 49(1) to the endless transfer conveyor 8(1) extending there-below (it will be clear that such a row transfer can also be achieved at a later stage, depending on a filling grade of subsequent transfer sections of the first egg transfer station T1) .

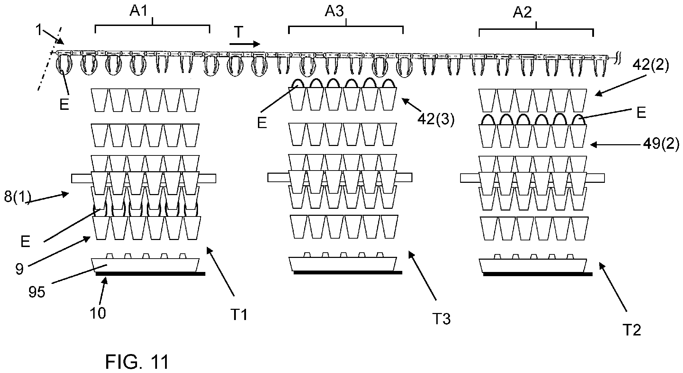

Figure 11 depicts a subsequent step (i.e. subsequent to Fig. 10), wherein the all six first upper egg receiving structures 42(3) of the third transfer station T3 are filled with eggs (from the third egg group G3), locally forming a third row of eggs. The second egg transfer station T2 has e.g. proceeded with dropping a row of eggs from the respective upper egg receiving structures 42(2) towards its second array of egg receiving structures 49(2) (it will be appreciated that this can also be carried out at a later stage, e.g. during a subsequent filling of the upper egg receiving structures of the first egg transfer station T1). Similarly, the endless transfer conveyor 8(1) egg transfer station T1 may have proceeded into transferring a respective egg row towards a lower section of that station T1 (but this can also be carried out at a different stage, depending e.g. on availability of downstream transfer structures).

In a next step (e.g. after all six first upper egg receiving structures 42(3) of the third transfer station T3 have been filled with eggs) the first array of six upper egg receiving structures 42(1) of the first egg transfer station T1 can be filled again, with eggs of a next first egg group G1 (as defined by the system controller) and the above process can be repeated.

Referring to Figures 8-9, it should be noted that the transfer of an egg row from an upper array of six egg receiving structures 42(1) of the first transfer station T1 to a respective second array of six egg receiving structures 49(1) can also be carried out (partly, or entirely) during the filling of the upper array of egg receiving structures 42(3) of the third egg transfer station T3.

Similarly, the transfer of an egg row from an upper array of six egg receiving structures 42(2) of the second transfer station T2 to a respective second array of six egg receiving structures 49(2) can e.g. be carried out (partly, or entirely) during the filling of the upper array of egg receiving structures 42(1) of the first egg transfer station T1.

Similarly, the transfer of an egg row from an upper array of six egg receiving structures 42(3) of the third transfer station T3 to a respective second array of six egg receiving structures 49(3) can e.g. be carried out (partly, or entirely) during the filling of the upper array of egg receiving structures 42(2) of the second egg transfer station T2.

Moreover, depending on the system configuration, and the eggs that are supplied by the supply conveyor 1, dropping of eggs towards various egg transfer stations T1, T2, T3 can be carried out simultaneously (e.g. in case two egg transfer stations are located relatively far from each other, in which case a defined egg group can still be in transit to a remote egg transfer station when the other egg transfer station has already received a respective row of eggs c.q. egg group from the supply conveyor, to be dropped for further processing).

In view of the above process, the present invention can provide relatively large time periods for upper arrays of egg receiving structures of the transfer stations T1, T2, T3 to drop egg rows, so that delays in the overall egg transfer process can be significantly reduced or avoided.

Herein, the invention is described with reference to specific examples of embodiments of the invention. It will, however, be evident that various modifications and changes may be made therein, without departing from the scope the appended claims. For the purpose of clarity and a concise description features are described herein as part of the same or separate embodiments, however, alternative embodiments having combinations of all or some of the features described in these separate embodiments are also envisaged.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

For example, the term "substantially horizontal" should be construed broadly, since a substantially horizontal direction can be a directly that is entirely horizontal or a direction that includes a small angle with a horizontal surface (e.g. an angle of about 30 degrees). The same holds for a substantially horizontal surface (which may be a slightly inclined surface).

Further, in this application, egg processing is in particular carried out on unfertilized eggs. In other word, the eggs E are dead (non-living) eggs, they do not contain any embryo. On the other hand, according to an embodiment, the eggs E can be living eggs (i.e. embryo containing eggs).

In the above embodiments, it may be implemented in whole or in part by software, hardware, firmware, or any combination thereof. When the software is used for implementation, it may be implemented in whole or in part in the form of the computer program product (to be executed by a respective system controller C). The computer program product includes one or more computer instructions. When the above computer program instruction is loaded and executed on a computer, the above processes or functions according to the embodiments of the present disclosure are generated in whole or in part. The above computer may be a general computer, a special computer, a computer network, or other programmable apparatus. The above computer instruction may be stored in the storage medium or transmitted from one storage medium to another storage medium..

It is also to be noted that relational terms such as first and second are used merely to distinguish one entity or operation from another entity or operation herein, and do not necessarily require or imply the existence of any such actual relationship or order between these entities or operations. Furthermore, terms "comprise", "include" or any other variants are intended to encompass non-exclusive inclusion, such that a process, a method, an article or a device including a series of elements not only include those elements, but also includes other elements not listed explicitly or includes intrinsic elements for the process, the method, the article, or the device.

For example, various groups of egg dropping areas can be located in various physical locations during operation, and moreover, such locations might change during system operation, depending e.g. on a group redistribution by a central controller. Also, during operation, a group of egg dropping areas can e.g. be temporarily put on stand-by (in which case no eggs are fed to that particular dropping area).

As an example, referring to Figure 2, interrelated egg dropping areas A1, A2, A3 of a first group can be located near each other, interrelated egg dropping areas A1', A2', A3' of a second group can be located near each other, and interrelated egg dropping areas A1", A2", A3" of a third group can be located near each other. In an alternative embodiment, the groups can be mixed, for example as in: A1-A1'-A3-A2"-A1"-A3'-A2'-A2-A3" or the-like.

Further, it will be appreciated that a number of egg supply lanes and/or a number of active packing stations can change during operation, depending on a number of eggs E that is to be processed and/or a change in egg packing requirements (e.g. due to a change in packaging orders).

Further, the various egg dropping areas of each group can all be defined for processing the same number of eggs, but that is not required. For example, one of the egg dropping areas of a group can be operational for assembling a row that consists of a number of N eggs wherein another of the egg dropping areas of the same group can be operational for assembling a row that consists of a number of M, with M≠N, eggs.

Further, the application of a buffering conveyor 8 (for receiving rows of eggs from an above array of first egg receiving structures) is entirely optional. The invention can also include other structures, devices, conveyors, a so-called 'shift-set', and/or systems for receiving eggs from an above array of egg receiving structures.

Further, each dropping area can be associated with various numbers of rows of egg receiving structures for receiving the eggs. For example, two arrays of (first) egg receiving structures can be provided with one above the other (as in the drawings), or more than two arrays (e.g. three, four or more) in a vertical sequence one above the other.

Moreover, various subsequent defined egg groups G1, G2, G3 may have the same size (i.e. they can include the same number of eggs) but that is certainly not required, and can depend e.g. on type(s) of eggs that are being supplied by the supply conveyor 1.

## Claims

1. Method for transferring eggs, including:
- supplying a plurality of eggs (E) along a respective supply path;
- dropping the supplied plurality eggs (E) at a plurality of separate egg dropping areas (A1, A2, A3) of the supply path, wherein each egg dropping area (A1, A2, A3) is associated with a respective egg transfer station (T1, T2, T3) having a first array of first egg receiving structures (42) that catches each egg (E) that is dropped in the respective egg dropping area (A1, A2, A3), to form a row of eggs; and
- dropping the row of eggs (E), by the first array of first egg receiving structures (42) of each egg transfer station (T1, T2, T3), for further processing;
wherein the method includes the steps:
- defining subsequent, adjoining, groups (G1, G2, G3) of eggs in the supplied plurality of eggs (E), such that each group of eggs (E) includes a sufficient number of eggs (E) for filling more than 50% of the first egg receiving structures (42) of one of the respective dropping areas (A1, A2, A3);
- a1) dropping eggs (E) from a defined first group (G1) of eggs at a first egg dropping area (A1), thereby filling more than 50% of the first egg receiving structures (42) of a respective first egg transfer station (T1) to form a first row of eggs, and dropping the respective first row of eggs; and
- a2) dropping eggs (E) from a defined second group (G2) of eggs at a second egg dropping area (A2), thereby filling more than 50% of the first egg receiving structures (42) of a respective second egg transfer station (T2) to form a second row of eggs, and dropping the respective second row of eggs; wherein during a transferring step the respective first egg receiving structures (42) of an egg transfer station (T1, T2, T3) drop a row of eggs (E) to a first array of second egg receiving structures (49), wherein the second egg receiving structures (49) catch the row of eggs (E), temporarily hold the eggs (E), and subsequently drop the eggs (E).

2. Method according to claim 1, wherein each egg dropping area (A1, A2, A3) is associated with the same number N of first egg receiving structures, N being 6, wherein each group of eggs (E) is defined to include at least four eggs (E) for filling the first egg receiving structures (42) of a respective dropping area (A1, A2, A3).

3. Method according to claim 2, wherein each group of eggs (E) is defined to include exactly six eggs (E) that are specifically assigned to the six first egg receiving structures (42) of a respective dropping area (A1, A2, A3), to fill all those six first egg receiving structures (42) during a respective dropping step a1), a2).

4. Method according to any of the preceding claims, including:
- a3) dropping eggs (E) from a defined third group (G3) of eggs at a third egg dropping area (A3), thereby filling more than 50% of the first egg receiving structures (42) of a respective third egg transfer station (T3) to form a third row of eggs, and dropping the respective third row of eggs.

5. Method according to any of the preceding claims, wherein at least step a1) is repeated.

6. Method according to any of the preceding claims, wherein at least one of the groups of eggs (E) includes a plurality of eggs having a first egg characteristic (M) and at least one egg having a second egg characteristic (S) that differs from the first egg characteristic (M), wherein only the eggs having the first egg characteristic (M) are used for filling the first egg receiving structures (42) of the respective dropping areas (A1, A2, A3).

7. Method according to any of the preceding claims, wherein the plurality of separate egg dropping areas (A1, A2, A3, A1', A2', A3', A1", A2", A3") at least includes a first group of egg dropping areas (A1, A2, A3) and a second group of egg dropping areas (A1', A2', A3') each of these groups of egg dropping areas being associated with respective group of egg transfer stations (T1, T2, T3, T1', T2', T3', T1", T2", T3") that assigned to transferring eggs (E) having a respective egg characteristic (S, M, L), wherein the method includes:
- defining subsequent first groups (G1, G2, G3) of eggs in the supplied plurality of eggs (E), such that each first group of eggs (E) includes a sufficient number of eggs (E) for filling more than 50% of the first egg receiving structures (42) of one of the respective dropping areas (A1, A2, A3) of the first group of dropping areas; and
- defining subsequent second groups of eggs in the supplied plurality of eggs (E), such that each second group of eggs (E) includes a sufficient number of eggs (E) for filling more than 50% of the first egg receiving structures (42) of one of the respective dropping areas (A1', A2', A3') of the second group of dropping areas.

8. Method according to any of the preceding claims, including:
- determining mutually different egg dropping positions, along the supply path, of the eggs (E) of each group (G1, G2, G3) of eggs, wherein each egg dropping position is associated with one first egg receiving structure (42) of the respective first array of first egg receiving structures (42) at the respective egg dropping area (A1, A2, A3), and optionally storing the determined egg dropping positions of each of the eggs in a memory; and
- using the determined egg dropping positions to drop the respective eggs (E).

9. System for transferring eggs, in particular a system configured to carry out a method according to any of the preceding claims, wherein the system includes:
- a supply conveyor (1) for supplying a plurality of eggs (E) along a respective supply path, wherein the conveyor (1) is configured for dropping the supplied plurality of eggs (E) at a plurality of separate egg dropping areas (A1, A2, A3) of the supply path;
- a plurality of egg transfer stations (T1, T2, T3), each being associated with a respective egg dropping area (A1, A2, A3), each egg transfer station (T1, T2, T3) having a first array of first egg receiving structures (42) configured to catch each egg (E) that is dropped in the respective egg dropping area (A1, A2, A3), and to form a row of eggs, and to drop the row of eggs (E); and
- a digital system controller (C) that is configured to carry out at least the following steps:
- define subsequent, adjoining, groups (G1, G2, G3) of eggs in the supplied plurality of eggs (E), such that each group of eggs (E) includes a sufficient number of eggs (E) for filling more than 50% of the first egg receiving structures (42) of one of the respective dropping areas (A1, A2, A3); and
control the supply conveyor (1) such that the conveyor:
- a1) drops eggs (E) from a defined first group (G1) of eggs at a first egg dropping area (A1) for filling more than 50% of the first egg receiving structures (42) of a respective first egg transfer station (T1);
- a2) drops eggs (E) from a defined second group (G2) of eggs at a second egg dropping area (A2) for filling more than 50% of the first egg receiving structures (42) of a respective second egg transfer station (T2); wherein each first array of egg receiving structures (42) is arranged at a substantially fixed position below the respective egg supply path provided by the supply conveyor (1),
wherein each egg transfer station (T1, T2, T3) has an array of second egg receiving structures (49), arranged at a substantially fixed position below a respective first array first egg receiving structures (42) for receiving a row of eggs there-from, the array of second egg receiving structures (49) being configured for temporarily holding a row of eggs and for dropping the row of eggs.

10. System according to claim 9, wherein each array of first egg receiving structures (42) consists of 6 egg receiving structures, wherein the system controller (C) is configured to define each group of eggs (E) to include at least four eggs (E) for filling the first egg receiving structures (42) of a respective dropping area (A1, A2, A3).

11. System according to any of the claims 9 or 10, wherein the system controller (C) is configured to control the supply conveyor (1) such that the conveyor:
- a3) drops eggs (E) from a defined third group (G3) of eggs at a third egg dropping area (A3) for filling more than 50% of the first egg receiving structures (42) of a respective third egg transfer station (T3).

12. System according to any of the claims 9-11, wherein the system includes a memory for storing at least one egg characteristic (S, M, L) of the eggs (E) that are supplied by the supply conveyor (1), wherein the system controller (C) is configured to use the stored egg characteristic (S, M, L) for defining the groups of eggs (E), in particular such that only eggs having the same egg characteristic (M) are used for filling the first egg receiving structures (42) of a respective dropping area (A1, A2, A3).

13. System according to any of the claims 9-12, wherein the system controller is configured to:
- determine mutually different egg dropping positions, along the supply path, of the eggs (E) of each group (G1, G2, G3) of eggs, wherein each egg dropping position is associated with one first egg receiving structure (42) of the respective first array of first egg receiving structures (42) at the respective egg dropping area (A1, A2, A3), and optionally storing the determined egg dropping positions of each of the eggs in a memory; and
- control the supply conveyor (1) to drop the respective eggs (E) at the determined egg dropping positions.

14. System according to any of the claims 9-13,
wherein each egg transfer station (T1, T2, T3) includes an egg buffering conveyor (8) having parallel arrays of egg receiving structures that are movable transversally with respect to the egg supply path of the supply conveyor (1), for receiving rows of eggs from an above array of first egg receiving structures.

15. System according to any of claims 9-13, wherein each dropping area is associated with more than two arrays of egg receiving structures that are provided in a vertical sequence one above the other.

16. A digital system controller, for example a computer or data processor, configured to control a system according to any of claims 9-15, for example to carry out a method according to any of claims 1-8, wherein the system controller is configured to carry out at least the following steps:
- define subsequent, adjoining, groups (G1, G2, G3) of eggs in the supplied plurality of eggs (E), such that each group of eggs (E) includes a sufficient number of eggs (E) for filling more than 50% of the first egg receiving structures (42) of one of the respective dropping areas (A1, A2, A3); and
control the supply conveyor (1) such that the conveyor:
- a1) drops eggs (E) from a defined first group (G1) of eggs at a first egg dropping area (A1), thereby filling more than 50% of the first egg receiving structures (42) of a respective first egg transfer station (T1);
- a2) drops eggs (E) from a defined second group (G2) of eggs at a second egg dropping area (A2), thereby filling more than 50% of the first egg receiving structures (42) of a respective second egg transfer station (T2); wherein the system controller (C) is further configured to:
control the first egg receiving structures (42) of a respective first egg transfer station (T1) to drop a row of eggs (E) into a respective array of second egg receiving structures (49) of the first transfer station (T1);
- control the first array of first egg receiving structures (42) of a respective second transfer station (T2) to drop a row of eggs (E) into a respective array of second egg receiving structures (49) of the second transfer station (T2).

## Patentansprüche

1. Verfahren zum Überführen von Eiern, umfassend:
- Zuführen einer Mehrzahl an Eiern (E) entlang eines jeweiligen Zuführwegs;
- Ablegen der zugeführten Mehrzahl an Eiern (E) an einer Mehrzahl an separaten Eiablagebereichen (A1, A2, A3) des Zuführwegs, wobei jeder Eiablagebereich (A1, A2, A3) einer jeweiligen Eiüberführungsstation (T1, T2, T3) zugeordnet ist, die über eine erste Anordnung von ersten Eiaufnahmestrukturen (42) verfügt, die jedes Ei (E) auffängt, das im jeweiligen Eiablagebereich (A1, A2, A3) abgelegt wird, um eine Reihe von Eiern zu bilden; und
- Ablegen der Reihe von Eiern (E) durch die erste Anordnung der ersten Eiaufnahmestrukturen (42) jeder Eiüberführungsstation (T1, T2, T3) zur weiteren Verarbeitung;
wobei das Verfahren die Schritte umfasst:
- Definieren nachfolgender, angrenzender Gruppen (G1, G2, G3) von Eiern in der zugeführten Mehrzahl an Eiern (E), sodass jede Gruppe von Eiern (E) eine ausreichende Anzahl von Eiern (E) enthält, um mehr als 50 % der ersten Eiaufnahmestrukturen (42) eines der jeweiligen Ablagebereiche (A1, A2, A3) zu füllen;
- a1) Ablegen von Eiern (E) aus einer definierten ersten Gruppe (G1) von Eiern in einem ersten Eiablagebereich (A1), wodurch mehr als 50 % der ersten Eiaufnahmestrukturen (42) einer jeweiligen ersten Eiüberführungsstation (T1) gefüllt werden, um eine erste Reihe von Eiern zu bilden, und Ablegen der jeweiligen ersten Reihe von Eiern; und
- a2) Ablegen von Eiern (E) aus einer definierten zweiten Gruppe (G2) von Eiern in einem zweiten Eiablagebereich (A2), wodurch mehr als 50 % der ersten Eiaufnahmestrukturen (42) einer jeweiligen zweiten Eiüberführungsstation (T2) gefüllt werden, um eine zweite Reihe von Eiern zu bilden, und Ablegen der jeweiligen zweiten Reihe von Eiern; wobei während eines Überführungsschrittes die jeweiligen ersten Eiaufnahmestrukturen (42) einer Eiüberführungsstation (T1, T2, T3) eine Reihe von Eiern (E) an eine erste Anordnung von zweiten Eiaufnahmestrukturen (49) ablegen, wobei die zweiten Eiaufnahmestrukturen (49) die Reihe von Eiern (E) auffangen, die Eier (E) vorübergehend halten und anschließend die Eier (E) ablegen.

2. Verfahren nach Patentanspruch 1, wobei jeder Eiablagebereich (A1, A2, A3) der gleichen Anzahl N von ersten Eiaufnahmestrukturen zugeordnet ist und N 6 ist, wobei festgelegt ist, dass jede Gruppe von Eiern (E) mindestens vier Eier (E) für das Befüllen der ersten Eiaufnahmestrukturen (42) eines jeweiligen Ablagebereichs (A1, A2, A3) umfasst.

3. Verfahren nach Patentanspruch 2, wobei festgelegt ist, dass jede Gruppe von Eiern (E) genau sechs Eier (E) umfasst, die speziell den sechs ersten Eiaufnahmestrukturen (42) eines jeweiligen Ablagebereichs (A1, A2, A3) zugeordnet sind, um alle diese sechs ersten Eiaufnahmestrukturen (42) während eines jeweiligen Ablageschrittes a1), a2) zu füllen.

4. Verfahren nach einem der vorhergehenden Patentansprüche, umfassend:
- a3) Ablegen von Eiern (E) aus einer definierten dritten Gruppe (G3) von Eiern in einem dritten Eiablagebereich (A3), wodurch mehr als 50 % der ersten Eiaufnahmestrukturen (42) einer jeweiligen dritten Eiüberführungsstation (T3) gefüllt werden, um eine dritte Reihe von Eiern zu bilden, und Ablegen der jeweiligen dritten Reihe von Eiern.

5. Verfahren nach einem der vorhergehenden Patentansprüche, wobei mindestens Schritt a1) wiederholt wird.

6. Verfahren nach einem der vorhergehenden Patentansprüche, wobei mindestens eine der Gruppen von Eiern (E) eine Mehrzahl an Eiern mit einem ersten Eimerkmal (M) und mindestens ein Ei mit einem zweiten Eimerkmal (S) umfasst, das sich vom ersten Eimerkmal (M) unterscheidet, wobei nur die Eier mit dem ersten Eimerkmal (M) zum Füllen der ersten Eiaufnahmestrukturen (42) der jeweiligen Ablagebereiche (A1, A2, A3) verwendet werden.

7. Verfahren nach einem der vorhergehenden Patentansprüche, wobei die Mehrzahl an separaten Eiablagebereichen (A1, A2, A3, A1', A2', A3', A1", A2", A3") mindestens eine erste Gruppe von Eiablagebereichen (A1, A2, A3) und eine zweite Gruppe von Eiablagebereichen (A1', A2', A3') aufweist, wobei jede dieser Gruppen von Eiablagebereichen der jeweiligen Gruppe von Eiüberführungsstationen (T1, T2, T3, T1', T2', T3', T1", T2", T3") zugeordnet ist, die zum Überführen von Eiern (E) mit einem jeweiligen Eimerkmal (S, M, L) zugeordnet sind, wobei das Verfahren umfasst:
- Definieren nachfolgender erster Gruppen (G1, G2, G3) von Eiern in der zugeführten Mehrzahl an Eiern (E), sodass jede erste Gruppe von Eiern (E) eine ausreichende Anzahl von Eiern (E) enthält, um mehr als 50 % der ersten Eiaufnahmestrukturen (42) eines der jeweiligen Ablagebereiche (A1, A2, A3) der ersten Gruppe von Ablagebereichen zu füllen; und
- Definieren nachfolgender zweiter Gruppen von Eiern in der zugeführten Mehrzahl an Eiern (E), sodass jede Gruppe von Eiern (E) eine ausreichende Anzahl von Eiern (E) enthält, um mehr als 50 % der ersten Eiaufnahmestrukturen (42) eines der jeweiligen Ablagebereiche (A1', A2', A3') der zweiten Gruppe von Ablagebereichen zu füllen.

8. Verfahren nach einem der vorhergehenden Ansprüche, umfassend:
- Bestimmen von wechselseitig unterschiedlichen Eiablagepositionen entlang des Zuführwegs der Eier (E) jeder Gruppe (G1, G2, G3) von Eiern, wobei jede Eiablageposition einer ersten Eiaufnahmestruktur (42) der jeweiligen ersten Anordnung von ersten Eiaufnahmestrukturen (42) im jeweiligen Eiablagebereich (A1, A2, A3) zugeordnet ist, und optional Speichern der bestimmten Eiablagepositionen jedes der Eier in einem Speicher; und
- Verwenden der bestimmten Eiablagepositionen, um die jeweiligen Eier (E) abzulegen.

9. System zum Überführen von Eiern, insbesondere ein System, das dazu konfiguriert ist, ein Verfahren nach einem der vorhergehenden Patentansprüche durchzuführen, wobei das System umfasst:
- ein Zuführförderband (1) zum Zuführen einer Mehrzahl an Eiern (E) entlang eines jeweiligen Zuführwegs, wobei das Förderband (1) zum Ablegen der zugeführten Mehrzahl an Eiern (E) an einer Mehrzahl an separaten Eiablagebereichen (A1, A2, A3) des Zuführwegs konfiguriert ist;
- eine Mehrzahl an Eiüberführungsstationen (T1, T2, T3), die jeweils einem entsprechenden Eiablagebereich (A1, A2, A3) zugeordnet sind, wobei jede Eiüberführungsstation (T1, T2, T3) eine erste Anordnung von ersten Eiaufnahmestrukturen (42) aufweist, die dazu ausgestaltet sind, jedes im jeweiligen Eiablagebereich (A1, A2, A3) abgegebene Ei aufzufangen und eine Reihe von Eiern zu bilden und die Reihe von Eiern (E) abzulegen; und
- eine digitale Systemsteuerung (C), die dazu konfiguriert ist, mindestens die folgenden Schritte auszuführen:
- Definieren nachfolgender, angrenzender, Gruppen (G1, G2, G3) von Eiern in der zugeführten Mehrzahl an Eiern (E), sodass jede Gruppe von Eiern (E) eine ausreichende Anzahl von Eiern (E) enthält, um mehr als 50 % der ersten Eiaufnahmestrukturen (42) eines der jeweiligen Ablagebereiche (A1, A2, A3) zu füllen; und
Steuern des Zuführförderbandes (1), sodass das Förderband:
- a1) Eier (E) aus einer definierten ersten Gruppe (G1) von Eiern in einem ersten Eiablagebereich (A1) abgibt, um mehr als 50 % der ersten Eiaufnahmestrukturen (42) einer jeweiligen ersten Eiüberführungsstation (T1) zu füllen;
- a2) Eier (E) aus einer definierten zweiten Gruppe (G2) von Eiern in einem zweiten Eiablagebereich (A2) abgibt, um mehr als 50 % der ersten Eiaufnahmestrukturen (42) einer jeweiligen zweiten Eiüberführungsstation (T2) zu füllen;
wobei jede erste Anordnung von Eiaufnahmestrukturen (42) an einer im Wesentlichen festen Position unterhalb des jeweiligen Eizuführwegs angeordnet ist, der vom Zuführförderband (1) bereitgestellt wird,
wobei jede Eiüberführungsstation (T1, T2, T3) eine Anordnung von zweiten Eiaufnahmestrukturen (49) aufweist, die an einer im Wesentlichen festen Position unter einer jeweiligen ersten Anordnung von ersten Eiaufnahmestrukturen (42) angeordnet sind, um von dort aus eine Reihe von Eiern aufzunehmen, wobei die Anordnung von zweiten Eiaufnahmestrukturen (49) zum zeitweiligen Halten einer Reihe von Eiern und zum Ablegen der Reihe von Eiern ausgestaltet ist.

10. System nach Patentanspruch 9, wobei jede Anordnung von ersten Eiaufnahmestrukturen (42) aus 6 Eiaufnahmestrukturen besteht, wobei die Systemsteuerung (C) dazu konfiguriert ist, jede Gruppe von Eiern (E) so festzulegen, dass sie wenigstens vier Eier (E) zum Füllen der ersten Eiaufnahmestrukturen (42) eines jeweiligen Ablagebereichs (A1, A2, A3) umfasst.

11. System nach einem der Patentansprüche 9 oder 10, wobei die Systemsteuerung (C) dazu konfiguriert ist, das Zuführförderband (1) so zu steuern, dass das Band:
- a3) Eier (E) aus einer definierten dritten Gruppe (G3) von Eiern in einem dritten Eiablagebereich (A3) abgibt, um mehr als 50 % der ersten Eiaufnahmestrukturen (42) einer jeweiligen dritten Eiüberführungsstation (T3) zu füllen.

12. System nach einem der Ansprüche 9-11, wobei das System einen Speicher zum Speichern mindestens eines Eimerkmals (S, M, L) der von dem Zuführförderband (1) zugeführten Eier (E) umfasst, wobei die Systemsteuerung (C) dazu konfiguriert ist, das gespeicherte Eimerkmal (S, M, L) zum Definieren der Gruppen von Eiern (E) zu verwenden, insbesondere so, dass nur Eier mit demselben Eimerkmal (M) zum Befüllen der ersten Eiaufnahmestrukturen (42) eines jeweiligen Ablagebereichs (A1, A2, A3) verwendet werden.

13. System nach einem der Patentansprüche 9-12, wobei die Systemsteuerung dazu konfiguriert ist:
- wechselseitig unterschiedliche Eiablagepositionen entlang des Zuführwegs der Eier (E) jeder Gruppe (G1, G2, G3) von Eiern zu bestimmen, wobei jede Eiablageposition einer ersten Eiaufnahmestruktur (42) der jeweiligen ersten Anordnung von ersten Eiaufnahmestrukturen (42) im jeweiligen Eiablagebereich (A1, A2, A3) zugeordnet ist, und optional die bestimmten Eiablagepositionen jedes der Eier in einem Speicher zu speichern; und
- das Zuführförderband (1) so zu steuern, dass es die jeweiligen Eier (E) an den bestimmten Eiablagepositionen ablegt.

14. System nach einem der Patentansprüche 9-13,
wobei jede Eiübernahmestation (T1, T2, T3) ein Eipufferförderband (8) aufweist, das parallele Anordnungen von Eiaufnahmestrukturen aufweist, die quer zum Eizuführweg des Zuführförderbands (1) bewegbar sind, um Reihen von Eiern aus einer darüber befindlichen Anordnung erster Eiaufnahmestrukturen aufzunehmen.

15. System nach einem der Patentansprüche 9-13, wobei jeder Ablagebereich mehr als zwei Anordnungen von Eiaufnahmestrukturen zugeordnet ist, die in einer vertikalen Abfolge übereinander bereitgestellt sind.

16. Digitale Systemsteuerung, beispielsweise ein Computer oder Datenprozessor, dazu konfiguriert, ein System nach einem der Patentansprüche 9-15 zu steuern, beispielsweise, um ein Verfahren nach einem der Patentansprüche 1-8 durchzuführen, wobei die Systemsteuerung dazu konfiguriert ist, wenigstens die folgenden Schritte auszuführen:
- Definieren nachfolgender, angrenzender, Gruppen (G1, G2, G3) von Eiern in der zugeführten Mehrzahl an Eiern (E), sodass jede Gruppe von Eiern (E) eine ausreichende Anzahl von Eiern (E) enthält, um mehr als 50 % der ersten Eiaufnahmestrukturen (42) eines der jeweiligen Ablagebereiche (A1, A2, A3) zu füllen; und
Steuern des Zuführförderbandes (1), sodass das Förderband:
- a1) Eier (E) aus einer definierten ersten Gruppe (G1) von Eiern in einem ersten Eiablagebereich (A1) abgibt, um dadurch mehr als 50 % der ersten Eiaufnahmestrukturen (42) einer jeweiligen ersten Eiüberführungsstation (T1) zu füllen;
- a2) Eier (E) aus einer definierten zweiten Gruppe (G2) von Eiern in einem zweiten Eiablagebereich (A2) abgibt, um dadurch mehr als 50 % der ersten Eiaufnahmestrukturen (42) einer jeweiligen zweiten Eiüberführungsstation (T2) zu füllen;
wobei die Systemsteuerung (C) ferner dazu konfiguriert ist:
die ersten Eiaufnahmestrukturen (42) einer jeweiligen ersten Eiüberführungsstation (T1) so zu steuern, dass eine Reihe von Eiern (E) in eine jeweilige Anordnung von zweiten Eiaufnahmestrukturen (49) der ersten Überführungsstation (T1) abgegeben wird;
- die erste Anordnung von ersten Eiaufnahmestrukturen (42) einer jeweiligen zweiten Überführungsstation (T2) so zu steuern, dass eine Reihe von Eiern (E) in eine jeweilige Anordnung von zweiten Eiaufnahmestrukturen (49) der zweiten Überführungsstation (T2) abgelegt wird.

## Revendications

1. Procédé de transfert d'œufs, comprenant les faits de :
- fournir une pluralité d'œufs (E) le long d'un chemin d'alimentation respectif ;
- laisser tomber la pluralité d'œufs (E) fournie au niveau d'une pluralité de zones de chute d'œufs séparées (A1, A2, A3) du chemin d'alimentation, dans lequel chaque zone de chute d'œufs (A1, A2, A3) est associée à une station de transfert d'œufs (T1, T2, T3) respective ayant un premier ensemble de premières structures de réception d'œufs (42) qui attrape chaque œuf (E) qui est tombé dans la zone de chute d'œufs (A1, A2, A3) respective, afin de former une rangée d'œufs ; et
- laisser tomber la rangée d'œufs (E), par le premier ensemble de premières structures de réception d'œufs (42) de chaque station de transfert d'œufs (T1, T2, T3), pour un traitement ultérieur ;
dans lequel le procédé comprend les étapes consistant à :
- définir des groupes (G1, G2, G3) d'œufs successifs et attenants dans la pluralité d'œufs (E) fournie, de sorte que chaque groupe d'œufs (E) comprend un nombre suffisant d'œufs (E) pour remplir plus de 50 % des premières structures de réception d'œufs (42) de l'une des zones de chute (A1, A2, A3) respectives ;
- a1) laisser tomber des œufs (E) d'un premier groupe (G1) d'œufs défini au niveau d'une première zone de chute d'œufs (A1), remplissant ainsi plus de 50 % des premières structures de réception d'œufs (42) d'une première station de transfert d'œufs (T1) respective pour former une première rangée d'œufs, et laisser tomber la première rangée d'œufs respective ; et
- a2) laisser tomber des œufs (E) d'un deuxième groupe (G2) d'œufs défini au niveau d'une deuxième zone de chute d'œufs (A2), remplissant ainsi plus de 50 % des premières structures de réception d'œufs (42) d'une deuxième station de transfert d'œufs (T2) respective pour former une deuxième rangée d'œufs, et laisser tomber la deuxième rangée d'œufs respective ;
dans lequel, pendant une étape de transfert, les premières structures de réception d'œufs (42) respectives d'une station de transfert d'œufs (T1, T2, T3) laissent tomber une rangée d'œufs (E) vers un premier ensemble de deuxièmes structures de réception d'œufs (49), dans lequel les deuxièmes structures de réception d'œufs (49) attrapent la rangée d'œufs (E), maintiennent temporairement les œufs (E), puis laissent ensuite tomber les œufs (E).

2. Procédé selon la revendication 1, dans lequel chaque zone de chute d'œufs (A1, A2, A3) est associée au même nombre N de premières structures de réception d'œufs, N étant 6, dans lequel chaque groupe d'œufs (E) est défini pour comprendre au moins quatre œufs (E) pour remplir les premières structures de réception d'œufs (42) d'une zone de chute (A1, A2, A3) respective.

3. Procédé selon la revendication 2, dans lequel chaque groupe d'œufs (E) est défini pour comprendre exactement six œufs (E) qui sont spécifiquement affectés aux six premières structures de réception d'œufs (42) d'une zone de chute (A1, A2, A3) respective, afin de remplir la totalité de ces six premières structures de réception d'œufs (42) lors d'une étape de chute a1), a2) respective.

4. Procédé selon l'une quelconque des revendications précédentes, comprenant : -a3) laisser tomber des œufs (E) d'un troisième groupe (G3) d'œufs défini au niveau d'une troisième zone de chute d'œufs (A3), remplissant ainsi plus de 50 % des premières structures de réception d'œufs (42) d'une troisième station de transfert d'œufs (T3) respective pour former une troisième rangée d'œufs, et laisser tomber la troisième rangée d'œufs respective.

5. Procédé selon l'une quelconque des revendications précédentes, dans lequel au moins l'étape a1) est répétée.

6. Procédé selon l'une quelconque des revendications précédentes, dans lequel au moins l'un des groupes d'œufs (E) comprend une pluralité d'œufs ayant une première caractéristique d'œuf (M) et au moins un œuf ayant une deuxième caractéristique d'œuf (S) différente de la première caractéristique d'œuf (M), dans lequel seuls les œufs ayant la première caractéristique d'œuf (M) sont utilisés pour remplir les premières structures de réception d'œufs (42) des zones de chute (A1, A2, A3) respectives.

7. Procédé selon l'une quelconque des revendications précédentes, dans lequel la pluralité de zones de chute d'œufs séparées (A1, A2, A3, A1', A2', A3', A1", A2", A3") comprend au moins un premier groupe de zones de chute d'œufs (A1, A2, A3) et un deuxième groupe de zones de chute d'œufs (A1', A2', A3'), chacun de ces groupes de zones de chute d'œufs étant associé à un groupe respectif de stations de transfert d'œufs (T1, T2, T3, T1', T2', T3', T1", T2", T3") affectées au transfert d'œufs (E) ayant une caractéristique d'œuf (S, M, L) respective, dans lequel le procédé comprend les faits de :
- définir des premiers groupes (G1, G2, G3) d'œufs successifs dans la pluralité d'œufs (E) fournie, de sorte que chaque premier groupe d'œufs (E) comprend un nombre suffisant d'œufs (E) pour remplir plus de 50% des premières structures de réception d'œufs (42) de l'une des zones de chute (A1, A2, A3) respectives du premier groupe de zones de chute ; et
- définir des deuxièmes groupes d'œufs successifs dans la pluralité d'œufs (E) fournie, de sorte que chaque deuxième groupe d'œufs (E) comprend un nombre suffisant d'œufs (E) pour remplir plus de 50 % des premières structures de réception d'œufs (42) de l'une des zones de chute (A1', A2', A3') respectives du deuxième groupe de zones de chute.

8. Procédé selon l'une quelconque des revendications précédentes, comprenant les faits de :
- déterminer des positions de chute d'œufs mutuellement différentes, le long du chemin d'alimentation, des œufs (E) de chaque groupe (G1, G2, G3) d'œufs, dans lequel chaque position de chute d'œuf est associée à une première structure de réception d'œufs (42) du premier ensemble respectif de premières structures de réception d'œufs (42) au niveau de la zone de chute d'œufs (A1, A2, A3) respective, et stocker facultativement les positions de chute d'œufs déterminées de chacun des œufs dans une mémoire ; et
- utiliser les positions de chute d'œufs déterminées pour laisser tomber les œufs (E) respectifs.

9. Système de transfert d'œufs, en particulier un système configuré pour mettre en œuvre un procédé selon l'une quelconque des revendications précédentes, dans lequel le système comprend :
- un transporteur d'alimentation (1) pour fournir une pluralité d'œufs (E) le long d'un chemin d'alimentation respectif, dans lequel le transporteur (1) est configuré pour laisser tomber la pluralité d'œufs (E) fournie au niveau d'une pluralité de zones de chute d'œufs séparées (A1, A2, A3) du chemin d'alimentation ;
- une pluralité de stations de transfert d'œufs (T1, T2, T3), chacune étant associée à une zone de chute d'œufs (A1, A2, A3) respective, chaque station de transfert d'œufs (T1, T2, T3) ayant un premier ensemble de premières structures de réception d'œufs (42) configuré pour attraper chaque œuf (E) qui tombe dans la zone de chute d'œufs (A1, A2, A3) respective, et pour former une rangée d'œufs, et pour laisser tomber la rangée d'œufs (E) ; et
- un contrôleur de système numérique (C) qui est configuré pour exécuter au moins les étapes suivantes comprenant les faits de :
- définir des groupes (G1, G2, G3) d'œufs successifs et attenants dans la pluralité d'œufs (E) fournie, de sorte que chaque groupe d'œufs (E) comprend un nombre suffisant d'œufs (E) pour remplir plus de 50 % des premières structures de réception d'œufs (42) de l'une des zones de chute (A1, A2, A3) respectives ; et commander le transporteur d'alimentation (1) de sorte que le transporteur :
- a1) laisse tomber des œufs (E) d'un premier groupe (G1) d'œufs défini au niveau d'une première zone de chute d'œufs (A1) pour remplir plus de 50 % des premières structures de réception d'œufs (42) d'une première station de transfert d'œufs (T1) respective ;
- a2) laisse tomber des œufs (E) d'un deuxième groupe (G2) d'œufs défini au niveau d'une deuxième zone de chute d'œufs (A2) pour remplir plus de 50 % des premières structures de réception d'œufs (42) d'une deuxième station de transfert d'œufs (T2) respective ;
dans lequel chaque premier ensemble de structures de réception d'œufs (42) est disposé dans une position sensiblement fixe sous le chemin d'alimentation d'œufs respectif fourni par le transporteur d'alimentation (1),
dans lequel chaque station de transfert d'œufs (T1, T2, T3) possède un ensemble de deuxièmes structures de réception d'œufs (49), disposé dans une position sensiblement fixe sous un premier ensemble respectif de premières structures de réception d'œufs (42) pour recevoir une rangée d'œufs provenant de celui-ci, l'ensemble de deuxièmes structures de réception d'œufs (49) étant configuré pour maintenir temporairement une rangée d'œufs et pour laisser tomber la rangée d'œufs.

10. Système selon la revendication 9, dans lequel chaque ensemble de premières structures de réception d'œufs (42) se compose de 6 structures de réception d'œufs, dans lequel le contrôleur de système (C) est configuré pour définir chaque groupe d'œufs (E) pour comprendre au moins quatre œufs (E) pour remplir les premières structures de réception d'œufs (42) d'une zone de chute (A1, A2, A3) respective.

11. Système selon l'une quelconque des revendications 9 ou 10, dans lequel le contrôleur de système (C) est configuré pour commander le transporteur d'alimentation (1) de sorte que le transporteur :
- a3) laisse tomber des œufs (E) d'un troisième groupe (G3) d'œufs défini au niveau d'une troisième zone de chute d'œufs (A3) pour remplir plus de 50 % des premières structures de réception d'œufs (42) d'une troisième station de transfert d'œufs (T3) respective.

12. Système selon l'une quelconque des revendications 9 à 11, dans lequel le système comprend une mémoire destinée à stocker au moins une caractéristique d'œuf (S, M, L) des œufs (E) qui sont alimentés par le transporteur d'alimentation (1), dans lequel le contrôleur de système (C) est configuré pour utiliser la caractéristique d'œuf (S, M, L) stockée pour définir les groupes d'œufs (E), en particulier de sorte que seuls les œufs ayant la même caractéristique d'œuf (M) soient utilisés pour remplir les premières structures de réception d'œufs (42) d'une zone de chute (A1, A2, A3) respective.

13. Système selon l'une quelconque des revendications 9 à 12, dans lequel le contrôleur de système est configuré pour :
- déterminer des positions de chute d'œufs mutuellement différentes, le long du chemin d'alimentation, des œufs (E) de chaque groupe (G1, G2, G3) d'œufs, dans lequel chaque position de chute d'œuf est associée à une première structure de réception d'œufs (42) du premier ensemble respectif de premières structures de réception d'œufs (42) au niveau de la zone de chute d'œufs (A1, A2, A3) respective, et stocker facultativement dans une mémoire, les positions de chute d'œufs déterminées de chacun des œufs ; et
- commander le transporteur d'alimentation (1) afin de laisser tomber les œufs (E) respectifs dans les positions de chute déterminées.

14. Système selon l'une quelconque des revendications 9 à 13, dans lequel chaque station de transfert d'œufs (T1, T2, T3) comprend un transporteur tampon d'œufs (8) ayant des ensembles parallèles de structures de réception d'œufs qui sont mobiles transversalement par rapport au chemin d'alimentation des œufs du transporteur d'alimentation (1), pour recevoir des rangées d'œufs depuis un ensemble supérieur de premières structures de réception d'œufs.

15. Système selon l'une quelconque des revendications 9 à 13, dans lequel chaque zone de chute est associée à plus de deux ensembles de structures de réception d'œufs qui sont prévus dans une séquence verticale, l'un au-dessus de l'autre.

16. Contrôleur de système numérique, par exemple un ordinateur ou un processeur de données, configuré pour commander un système selon l'une quelconque des revendications 9 à 15, par exemple pour mettre en œuvre un procédé selon l'une quelconque des revendications 1 à 8, dans lequel le contrôleur de système est configuré pour exécuter au moins les étapes suivantes :
- définir des groupes (G1, G2, G3) d'œufs successifs et attenants dans la pluralité d'œufs (E) fournie, de sorte que chaque groupe d'œufs (E) comprend un nombre suffisant d'œufs (E) pour remplir plus de 50 % des premières structures de réception d'œufs (42) de l'une des zones de chute (A1, A2, A3) respectives ; et
commander le transporteur d'alimentation (1) de sorte que le transporteur :
- a1) laisse tomber des œufs (E) d'un premier groupe (G1) d'œufs défini au niveau d'une première zone de chute d'œufs (A1), remplissant ainsi plus de 50 % des premières structures de réception d'œufs (42) d'une première station de transfert d'œufs (T1) respective ;
- a2) laisse tomber des œufs (E) d'un deuxième groupe (G2) d'œufs défini au niveau d'une deuxième zone de chute d'œufs (A2), remplissant ainsi plus de 50 % des premières structures de réception d'œufs (42) d'une deuxième station de transfert d'œufs (T2) respective ;
dans lequel le contrôleur de système (C) est en outre configuré pour :
- commander les premières structures de réception d'œufs (42) d'une première station de transfert d'œufs (T1) respective afin de laisser tomber une rangée d'œufs (E) dans un ensemble de deuxièmes structures de réception d'œufs (49) respectif de la première station de transfert (T1) ;
- commander le premier ensemble de premières structures de réception d'œufs (42) d'une deuxième station de transfert (T2) respective afin de laisser tomber une rangée d'œufs (E) dans un ensemble de deuxièmes structures de réception d'œufs (49) respectif de la deuxième station de transfert (T2).
